# EUROPEAN PATENT APPLICATION

(11) **EP 4 254 757 A1**
(43) Date of publication of application: **04.10.2023**
(21) Application number: 23163066.6
(22) Date of filing: 21.03.2023
(51) Int. Cl.: H02M 1/42, H02M 1/00, H02M 1/32

(54) **CONTROLLER APPARATUS AND CONTROL METHOD FOR POWER SUPPLY CIRCUIT APPARATUS, AND POWER SUPPLY CIRCUIT APPARATUS**

(30) Priority: 01.04.2022 JP 2022062006
(71) Applicant: OMRON Corporation, Kyoto 600-8530 (JP)
(72) Inventor: TANINO, Kohei, 600-8530 Kyoto (JP); NAGANO, Masaaki, 600-8530 Kyoto (JP); WATANABE, Tomonori, 600-8530 Kyoto (JP)
(74) Representative: HGF

(57) **Abstract**

A controller apparatus (10A, 10B) is provided for a power supply circuit apparatus, where the controller apparatus (10A, 10B) converts an input voltage (Vin) into a predetermined voltage. A first peak-hold circuit (33) detects the input voltage (Vin), and holds a peak of a signal voltage (Vs1) corresponding to the input voltage (Vin). A first time constant circuit (15) discharges a peak-held signal voltage (Vs1) with a predetermined first time constant, and outputs a discharged signal voltage (Vs1). A controller (4A, 5A) compares the discharged signal voltage (Vs1) with a predetermined first threshold voltage (Vref1), operates the power supply circuit apparatus when the discharged signal voltage (Vs1) is equal to or higher than the first threshold voltage (Vref1), and stops an operation of the power supply circuit apparatus when the discharged signal voltage (Vs1) is lower than the first threshold voltage (Vref1).

## Description

### TECHNICAL FIELD

The present invention relates to a controller apparatus and a control method for a power supply circuit apparatus such as a power conversion apparatus and a power factor correction circuit apparatus, and the power supply circuit apparatus.

### BACKGROUND ART

In a power supply circuit apparatus or another circuit apparatus, when an input voltage of these circuit apparatuses decreases, an input current increases, and heat generation of components such as a semiconductor element and a coil winding becomes a problem. Therefore, the power conversion apparatus is stopped when the input voltage decreases.

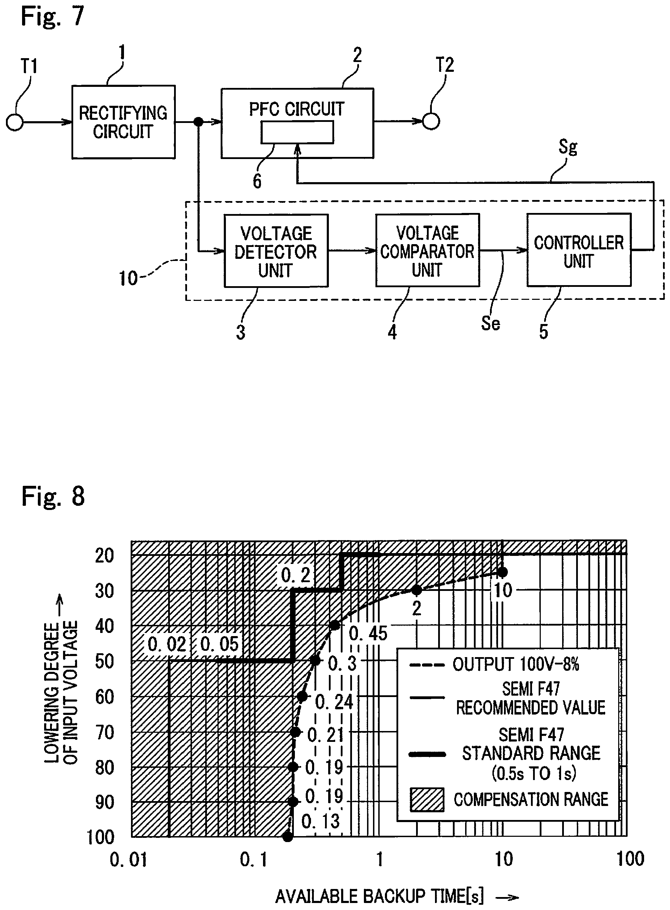

Fig. 7 is a circuit diagram showing a configuration example of a power supply circuit apparatus including a controller circuit 10 according to the conventional technique. Referring to Fig. 7, the power supply circuit apparatus includes a rectifying circuit 1, a power factor correction circuit (hereinafter, it is referred to as a PFC circuit) 2, and the controller circuit 10. In this case, the controller circuit 10 includes a voltage detector unit 3, a voltage comparator unit 4, and a controller unit 5.

The rectifying circuit 1 rectifies an input voltage input to an input terminal T1 and outputs the rectified voltage to the PFC circuit 2 and the voltage detector unit 3. The PFC circuit 2 improves a power factor of the input rectified voltage so as not to generate a harmonic component using, for example, a step-up DC to DC converter using a switching element 6, and outputs a predetermined DC voltage to an output terminal T2. At this point, the switching element 6 performs a switching operation based on a gate control signal Sg from the controller unit 5.

The voltage detector unit 3 detects an input voltage based on the rectified voltage, and outputs a signal voltage indicating the input voltage to the voltage comparator unit 4. Next, the voltage comparator unit 4 compares the signal voltage with a predetermined threshold voltage (reference voltage), generates an enable signal Se at a H level when the signal voltage ≥ the threshold voltage, and generates an enable signal Se at an L level when the signal voltage < the threshold voltage. The controller unit 5 generates a gate control signal Sg on the basis of the enable signal Se having the H level, executes the switching operation of the switching element 6 in the PFC circuit 2, and operates the PFC circuit 2. In addition, based on the enable signal Se having the L level, the controller unit 5 stops generation of the gate control signal Sg, stops the switching operation of the switching element 6 in the PFC circuit 2, and stops the operation of the PFC circuit 2.

In this case, the threshold voltage for stopping the converter of the PFC circuit 2 may be set to a value smaller than an allowable input voltage (minimum value) of a product, but needs to be set lower than necessary in consideration of an instantaneous drop and the like. Hereinafter, a conventional example will be described.

For example, in the case of an electric apparatus with a rated AC 200 V and an allowable input voltage range of AC 170 V to 240 V, the threshold voltage for stopping is set to AC 100 V or less as follows, for example, in consideration of an instantaneous drop.

Threshold voltage for stopping = AC 90 Vtyp.

That is, in order to comply with the "SEMIF 47 standard" shown in Fig. 8, the operation is performed even at a voltage of half AC 200 V. It is noted that Fig. 8 is a graph showing an instantaneous drop tolerance curve indicating the "SEMI F 47 standard" which is the "specification for semiconductor process apparatus voltage sag immunity" disclosed in Non-Patent Literature 1 and applied to the power supply circuit apparatus of Fig. 7. Referring to Fig. 8, the dotted line is an instantaneous drop tolerance curve that stops when the output voltage decreases by -8% from the specified voltage in the case of the resistive load of 700 W.

### CITATION LIST

### PATENT LITERATURE

Patent Literature 1: Japanese patent publication No. JP6110147B2

### Non-Patent Literature

Non-Patent Literature 1: Fuji Electric Co., Ltd., "Product information, power supply solution, instantaneous voltage drop protection apparatus, DipHunter (1 kVA), constant INV instantaneous power interruption countermeasure, features", [online], [searched on February 8, 2022], Internet, <URL: https://www.fujielectric.co.jp/products/power_supply/mlp/diphunter.html>

### SUMMARY OF INVENTION

### TECHNICAL PROBLEM

The power supply circuit apparatus according to the conventional technique has the following problems.
(1) If the user continues to use the power supply circuit apparatus at a low voltage (In the above example, it is operated at AC 130 V), the components may generate heat and be damaged.
(2) For example, in a case where AC 90 V is set as a threshold voltage for stopping, the product stops immediately when the AC voltage instantaneously drops to AC 85 V. In other words, there is such a problem that the power supply circuit apparatus may be a product that stops immediately depending on the voltage of the instantaneous drop.

An object of the present invention is to solve the above problems, and to provide a controller apparatus and a control method for a power supply circuit apparatus, and the power supply circuit apparatus capable of preventing components from generating heat and being damaged even when the power supply circuit apparatus is continuously used at a low voltage and preventing the power supply circuit apparatus from immediately stopping in the case of an instantaneous drop.

### SOLUTION TO PROBLEM

According to one aspect of the present invention, there is provided a controller apparatus (10A, 10B) for a power supply circuit apparatus, where the controller apparatus converts an input voltage (Vin) into a predetermined voltage. The controller apparatus (10A, 10B) includes a first peak-hold circuit (3A), a first time-constant circuit (15), and a controller (4A, 5A). The first peak-hold circuit (33) is configured to detect the input voltage (Vin) and hold a peak of a signal voltage (Vs1) corresponding to the input voltage (Vin), and the first time constant circuit (15) is configured to discharge the peak-held signal voltage (Vs1) with a predetermined first time constant, and output a discharged signal voltage (Vs1). The controller (4A, 5A) is configured to compare the discharged signal voltage (Vs1) with a predetermined first threshold voltage (Vrefl), operate the power supply circuit apparatus when the discharged signal voltage (Vs1) is equal to or higher than the first threshold voltage (Vrefl), and stop an operation of the power supply circuit apparatus when the discharged signal voltage (Vs1) is lower than the first threshold voltage (Vref1).

### ADVANTAGEOUS EFFECTS OF INVENTION

Therefore, according to the controller apparatus or the like of the power supply circuit apparatus according to the present invention, even when the power supply circuit apparatus is continuously used at a low voltage, it is possible to prevent the components from generating heat and being damaged, and it is possible to prevent the power supply circuit apparatus from immediately stopping in the case of an instantaneous drop.

### BRIEF DESCRIPTION OF DRAWINGS

Fig. 1 is a circuit diagram showing a configuration example of a power supply circuit apparatus including a controller circuit 10A that is a time-setting brown-in brown-out circuit according to a first embodiment.
Fig. 2 is a waveform diagram of respective voltages and a signal indicating hysteresis characteristics of the time-setting brown-in brown-out circuit included in the controller circuit 10A of Fig. 1.
Fig. 3 is a waveform diagram of voltages Vr2 and Vr3 showing an operation of adjusting the discharge speed by a peak-hold circuit included in the controller circuit 10A of Fig. 2.
Fig. 4 is a waveform diagram of voltages Vr2 and Vr3 indicating an adjustment operation of the discharge speed when the time constant (C3 x R3) of the controller circuit 10A of Fig. 1 is relatively small.
Fig. 5 is a waveform diagram of voltages Vr2 and Vr3 indicating an adjustment operation of the discharge speed when the time constant (C3 x R3) of the controller circuit 10A of Fig. 1 is relatively large.
Fig. 6 is a circuit diagram showing a configuration example of a power supply circuit apparatus including a controller circuit 10B further including an additional controller circuit 30 according to a second embodiment.
Fig. 7 is a circuit diagram showing a configuration example of a power supply circuit apparatus including a controller circuit 10 according to the conventional technique.
Fig. 8 is a graph showing an instantaneous drop tolerance curve indicating the "SEMI F 47 standard" which is the "specification for semiconductor process apparatus voltage sag immunity" disclosed in Non-Patent Literature 1 and applied to the power supply circuit apparatus of Fig. 7.

### DESCRIPTION OF EMBODIMENTS

Hereinafter, embodiments and modifications according to the present invention will be described with reference to the drawings. The same or similar components are denoted by the same reference numerals.

### FIRST EMBODIMENT

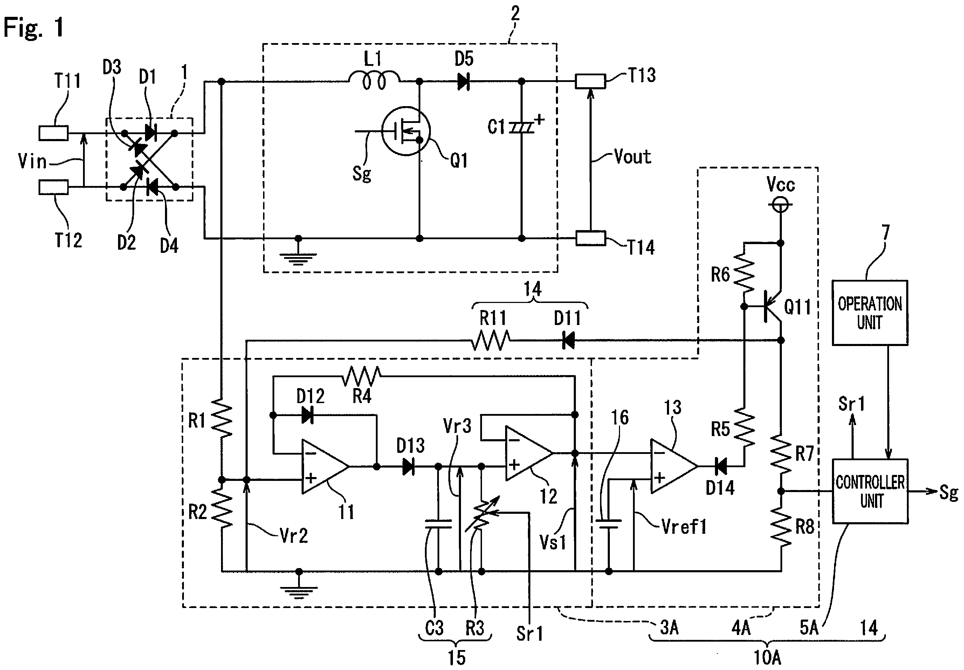

Fig. 1 is a circuit diagram showing a configuration example of a power supply circuit apparatus including a controller circuit 10A that is a time-setting brown-in brown-out circuit according to a first embodiment. The controller circuit 10A of the power supply circuit apparatus according to the first embodiment includes a controller circuit 10A including a peak-hold circuit 3A including a voltage detector unit and a time constant circuit 15 capable of changing a time constant.

Referring to Fig. 1, the power supply circuit apparatus according to the first embodiment includes a rectifying circuit 1, a PFC circuit 2, and the controller circuit 10A. In this case, the controller circuit 10A includes the peak-hold circuit 3A, a voltage comparator unit 4A, a reference voltage generator circuit 14, and a controller unit 5A including an operation unit 7.

The rectifying circuit 1 includes, for example, a full-wave rectifying circuit by connecting four diodes D1 to D4 in a bridge format. In this case, the rectifying circuit 1 performs, for example, full-wave rectification on an input voltage Vin input to input terminals T11 and T12, and outputs the rectified voltage to the PFC circuit 2 and the peak-hold circuit 3A.

The PFC circuit 2 includes a choke inductor L1, a diode D5, a MOS field-effect transistor (hereinafter, it is referred to as a MOS transistor) Q1 as a switching element, and a smoothing capacitor C1. The PFC circuit 2 improves the power factor of the input rectified voltage so as not to generate harmonic components by using, for example, a step-up DC to DC converter using the MOS transistor Q1 as a switching element, and outputs a predetermined DC voltage to output terminals T13 and T14. In this case, the MOS transistor Q1 performs a switching operation based on the gate control signal Sg from the controller unit 5A.

The peak-hold circuit 3A includes voltage-detecting voltage-dividing resistors R1 and R2, an operational amplifier 11 having a diode D12 in a feedback circuit, a diode D13, a voltage-holding capacitor C3, a charge-discharging variable resistor R3, an operational amplifier 12 configuring a voltage follower, and a feedback resistor R4 from the operational amplifier 12 to the operational amplifier 11. In this case, the capacitor C3 and the variable resistor R3 configure a time constant circuit 15, and the resistance value of the variable resistor R3 is controlled and set by a control signal Sr1 from the controller unit 5A.

The peak-hold circuit 3A configured as described above includes the voltage-detecting voltage-dividing resistors R1 and R2 (configuring the voltage detector unit) and a peak-hold circuit portion at a subsequent stage, and the peak-hold circuit portion at the subsequent stage includes the time constant circuit 15. The peak-hold circuit 3A detects the rectified voltage by the voltage-detecting voltage-dividing resistors R1 and R2, holds a peak of a detected rectified voltage by the voltage-holding capacitor C3 using an action of negative feedback, then gradually decreases the detected voltage by the charge-discharging variable resistor R3, and outputs the detected voltage to the voltage comparator unit 4A. In this case, the peak-hold circuit 3A detects an input voltage based on the rectified voltage, and outputs a signal voltage Vs1 indicating the input voltage to the voltage comparator unit 4.

In this case, the decrease rate of the detected voltage is determined by the time constant (C3 x R3) of the time constant circuit 15. In the first embodiment, the variable resistor R3 includes, for example, a resistor circuit in which a plurality of resistors are connected in series and each switch is connected in parallel to each of the resistors, and the resistance value can be set by turning on and off each switch by the control signal Sr1. Then, when the user operates the operation unit 7 including, for example, a keyboard to input the time constant (C3 x R3), the control signal Sr1 indicating R3 corresponding thereto is applied from the controller unit 5A to the control terminal of the variable resistor R3, and the resistance value of the variable resistor R3 is set.

The voltage comparator unit 4A includes a comparator 13, a reference voltage source 16 having a reference voltage Vref1, a reverse voltage blocking output diode D14, resistors R5 to R8, and a PNP bipolar transistor (hereinafter, it is referred to as a transistor) Q 11 for turning on or off the output signal. It is noted that the series circuit of the resistor R11 and the diode D14 configures a reference voltage generator circuit 14, which is provided for applying a collector voltage of the transistor Q11 as a reference voltage to a non-inverting input terminal of the operational amplifier 11.

The voltage comparator unit 4A configured as described above compares the signal voltage Vs1 with a predetermined threshold voltage (reference voltage) Vref1. Then, when the signal voltage Vs1 ≥ the threshold voltage Vref1, the transistor Q11 is turned on and generates an enable signal Se having the H level, and when the signal voltage Vs1 < the threshold voltage Vref1, the transistor Q11 is turned off and generates an enable signal Se having the L level.

Based on the enable signal Se having the H level, the controller unit 5A generates a PWM-modulated gate control signal Sg having a predetermined duty ratio, for example, and causes the switching element 6 in the PFC circuit 2 to perform switching operation to operate the PFC circuit 2. In addition, based on the enable signal Se having the L level, the controller unit 5A stops generation of the gate control signal Sg, stops the switching operation of the switching element 6 in the PFC circuit 2, and stops the operation of the PFC circuit 2.

As described above, according to the controller circuit 10A of the first embodiment, the rectified voltage obtained by full-wave rectifying the AC input voltage of the power supply circuit apparatus is monitored, and the controller circuit 10A stops if the full-wave rectified voltage continues to be equal to or less than a certain voltage for an arbitrary time. The controller circuit 10A including the time-setting brown-in brown-out circuit configured as described above can be configured with a simple configuration and an inexpensive circuit as compared with the controller circuit 10 according to the conventional technique in Fig. 7.

### HYSTERESIS CHARACTERISTICS OF TIME-SETTING BROWN-IN BROWN-OUT CIRCUIT

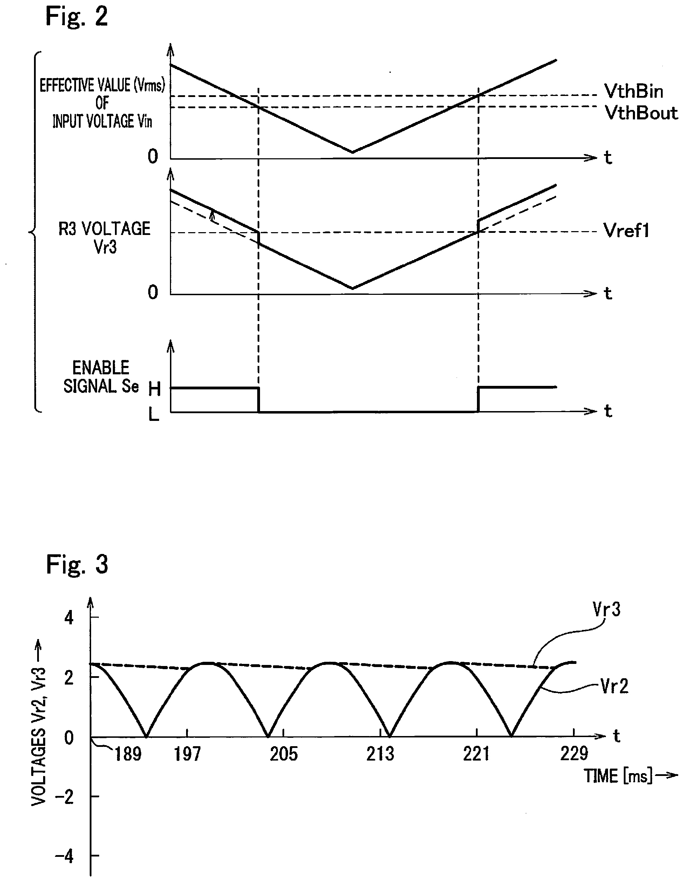

Fig. 2 is a waveform diagram of respective voltages and a signal indicating hysteresis characteristics of the time-setting brown-in brown-out circuit included in the controller circuit 10A of Fig. 1. In Fig. 2, VthBin denotes a threshold voltage of brown-in, and VthBout denotes a threshold voltage of brown-out. In this case, Fig. 2 shows the relationship with the control enable signal Se by a hysteresis circuit from waveform diagrams of the effective value of the input voltage Vin, a voltage Vr3 of the resistor R3, and the enable signal Se of the voltage comparator unit 4A.

As is apparent from Fig. 2, the voltage Vr3 of the resistor R3 is increased by the reference voltage generator circuit 14 including the diode D11 and the resistor R11 with respect to the inclined dotted line determined by the voltage-detecting voltage-dividing resistors R1 and R2. As a result, the brown-out voltage is made to be lower than the brown-in voltage. Therefore, as shown in Fig. 2, the brown-in brown-out circuit has hysteresis characteristics.

### ADJUSTMENT OPERATION OF DISCHARGE RATE BY PEAK-HOLD CIRCUIT 3A

Fig. 3 is a waveform diagram of voltages Vr2 and Vr3 showing an operation of adjusting the discharge speed by the peak-hold circuit 3A included in the controller circuit 10A of Fig. 2. As is apparent from Fig. 3, it can be seen that the peak of the rectified voltage Vr2 is held, and the discharge rate of the rectified voltage can be adjusted.

The adjustment operation is as follows.
(1) The peak-hold circuit 3A holds the peak of the full-wave rectified voltage of the input AC voltage (input voltage Vin). At this time, the time constant circuit 15 including the capacitor C3 and the resistor R3 can adjust the discharge speed of the peak-held voltage according to the time constant (C3 x R3).
(2) When the input voltage Vin is normal, the voltage comparator unit 4A compares the peak-held signal voltage Vs1 with the threshold voltage Vref1, and when Vs1 ≥ Vref1, the output voltage of the comparator 13 decreases to the L level, and the transistor Q11 is turned on.
(3) When the transistor Q11 is turned on, the enable signal Se having the H level is outputted to the controller unit 5A, and the controller unit 5A enters an operation state of generating the gate control signal Sg. At this time, the hysteresis characteristics are generated by adding the power supply voltage Vcc to the input stage of the peak-hold circuit 3A via the reference voltage generator circuit 14 including the diode D11 and the resistor R11.
(4) On the other hand, when the input voltage Vin decreases, the voltage comparator unit 4A compares the peak-held signal voltage Vs1 with the threshold voltage Vref1, and when Vs1 < Vref1, the output voltage of the comparator 13 rises to the H level, and the transistor Q11 is turned off.
(5) When the transistor Q11 is turned off, the enable signal Se having the L level is outputted to the controller unit 5A, and the controller unit 5A stops generation of the gate control signal Sg.

### EXAMPLES

Next, examples of the controller circuit 10A of the power supply circuit apparatus according to the first embodiment will be described below.

### EXAMPLE 1

When the input voltage Vin is, for example, AC 160 V or more, the operation of the power supply circuit apparatus can be continued, and when the input voltage Vin is, for example, less than AC 160 V, the power supply circuit apparatus can be stopped for a duration of 0.3 seconds. In this case, as soon as the input voltage Vin rises to AC 200 V, the operation of the power supply circuit apparatus can be restored.

For example, the control of Example 1 can be performed, and the duration can be arbitrarily adjusted by the time constant (C3 x R3) of the time constant circuit 15. In the embodiment of Fig. 1, the user sets the resistance value of the resistor R3 using the operation unit 7, so that the duration can be adjusted by the time constant (C3 x R3) of the time constant circuit 15. In this case, the allowable input voltage range of the operation stop voltage can be set as high as possible with respect to AC 170 V. In addition, even in a lower portion such as AC 85 V or AC 70 V, the voltage at the time of the instantaneous drop can have robustness that can withstand the instantaneous drop within 0.3 seconds.

### EXAMPLE 2

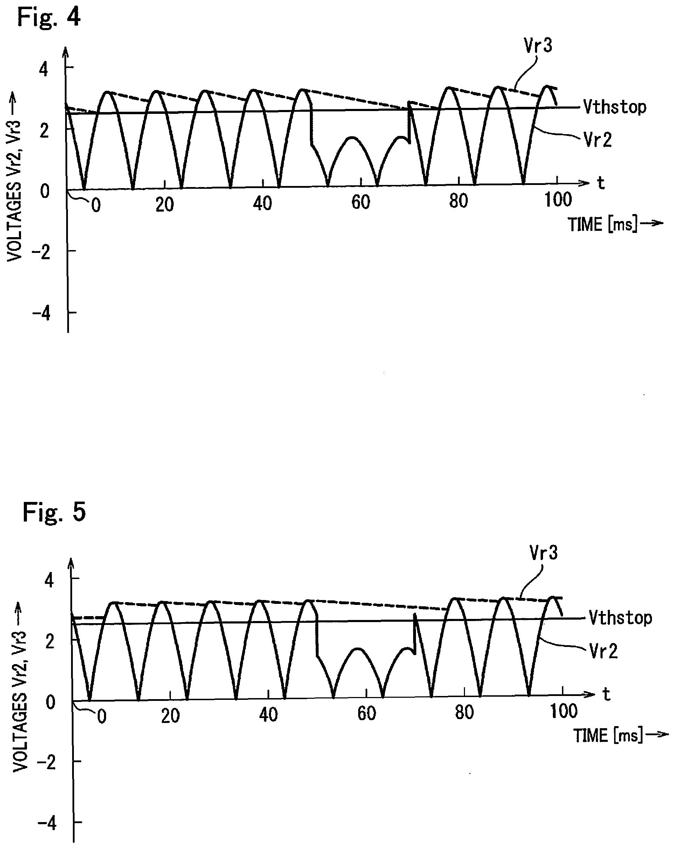

Fig. 4 is a waveform diagram of voltages Vr2 and Vr3 indicating an adjustment operation of the discharge speed when the time constant (C3 x R3) of the controller circuit 10A of Fig. 1 is relatively small, and shows an example when R3 = 100 kS2 and C3 = 1 µF. Fig. 5 is a waveform diagram of voltages Vr2 and Vr3 indicating an adjustment operation of the discharge speed when the time constant (C3 x R3) of the controller circuit 10A of Fig. 1 is relatively large, and shows an example when R3 = 470 kS2 and C3 = 1 µF.

Figs. 4 and 5 show simulation results at the time of so-called "instantaneous drop" in which the input voltage Vin is decreased from AC 200 V to AC 100 V for a predetermined time interval, and then, is returned to AC 200 V. As is apparent from Figs. 4 and 5, when the threshold voltage Vrefl for stopping the controller unit 5A is set to, for example, 2.5 V, the controller unit 5A can be adjusted to stop or not to stop depending on the discharge speed of the peak-hold. As shown in Fig. 3, since the discharge speed of the peak-hold can be adjusted by adjusting the time constant (C3 x R3), the controller unit 5A can be prevented from being stopped at the moment of the instantaneous drop by this adjustment.

### SET PATTERNS OF TIME CONSTANT AND THRESHOLD VOLTAGE

Hereinafter, set patterns of a time constant and a threshold voltage in a case where R2/(R1 + R2) = 1/100 (excluding hysteresis characteristics for simplification) will be described.

### (1) SET PATTERN 1:

It is assumed that it is operated when the input voltage Vin is at AC 200 V in a normal state.
(CONDITION a) The input voltage Vin is brown out at AC 160 V.
(CONDITION b) When the input voltage Vin instantaneously drops from AC 200 V to AC 100 V or AC 70 V, the controller unit 5A is moved for 0.3 seconds, and thereafter, the controller unit 5A is stopped for safety.

In such a case, according to the simulation of the present inventors, when the following conditions are set:
Threshold voltage Vrefl = 2.2 V;
C3 = 3.3 µF; and
R3 = 470 kS2,
then, the set pattern 1 was achieved.

It is noted that, from V (t) = V0 x exp (-t/RC), it is found that since Vo = 2.74 in the case of AC 200, V (t) = 2.25, and then, it is 2.2 V or more when the substitution is performed, and the Condition b can be achieved.

### (2) SET PATTERN 2:

It is assumed that it is operated when the input voltage Vin is at AC 200 V in a normal state.
(CONDITION a) The input voltage Vin is brown out at AC 160 V.
(Condition b) When the input voltage Vin instantaneously drops from AC 200 to AC 100 V or AC 70 V, the controller unit 5A is moved for 30 ms, and thereafter, the controller unit 5A is stopped.

This prevents the controller unit 5A from stopping even after a time interval of 1.5 cycles of the commercial frequency has elapsed.

In such a case, according to the simulation of the present inventors, when the following conditions are set:
Threshold voltage Vrefl = 2.2 V;
C3 = 3.3 µF; and
R3 = 47 kS2,
then, the set pattern 2 was achieved.

### OPERATION AND EFFECT OF FIRST EMBODIMENT

As described above, according to the controller circuit 10A of the first embodiment, the rectified voltage obtained by full-wave rectifying the AC input voltage of the power supply circuit apparatus is monitored, and the controller circuit is stopped if the full-wave rectified voltage continues to be equal to or less than a certain voltage for an arbitrary time. The controller circuit 10A including the time-setting brown-in brown-out circuit configured as described above can be configured with a simple configuration and an inexpensive circuit as compared with the controller circuit 10 according to the conventional technique in Fig. 7. Therefore, even when the power supply circuit apparatus is continuously used at a low voltage, it is possible to prevent the components from generating heat and being damaged, and it is possible to prevent the power supply circuit apparatus from immediately stopping in the case of the instantaneous drop.

### SECOND EMBODIMENT

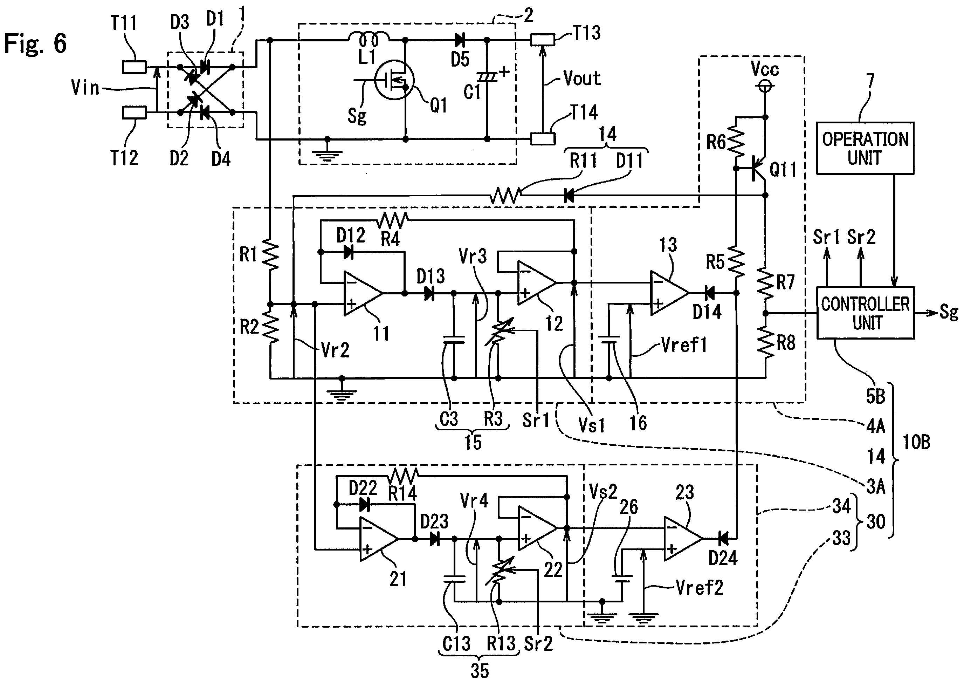

Fig. 6 is a circuit diagram showing a configuration example of a power supply circuit apparatus including a controller circuit 10B further including an additional controller circuit 30 according to a second embodiment. The power supply circuit apparatus according to the second embodiment in Fig. 6 is different from the power supply circuit apparatus in Fig. 1 in the following points.
(1) The additional controller circuit 30 is further provided.
(2) A controller 5B is provided instead of the controller unit 5A.
(3) Instead of the controller circuit 10A, the controller circuit 10B further including the additional controller circuit 30 is provided.

The differences will be described below.

Referring to Fig. 6, the additional controller circuit 30 includes a peak-hold circuit 33 and a voltage comparator unit 34. The controller unit 5B is configured in a manner similar to that of the controller unit 5A except that generation of a control signal Sr2 to be described later is added.

The peak-hold circuit 33 includes an operational amplifier 21 having a diode D22 in a feedback circuit, a diode D23, a voltage-holding capacitor C13, a charge-discharging variable resistor R13, an operational amplifier 22 configuring a voltage follower, and a feedback resistor R14 from the operational amplifier 22 to the operational amplifier 21. In this case, the capacitor C13 and the variable resistor R13 configure a time constant circuit 35, and the resistance value of the variable resistor R13 is controlled, and is set by the control signal Sr2 from the controller unit 5B.

The peak-hold circuit 33 configured as described above is configured in a manner similar to that of the peak-hold circuit 3A except that the voltage-detecting voltage-dividing resistors R1 and R2 are not provided, that is, it is configured only from the peak-hold circuit portion in Fig. 1 and includes the time constant circuit 35. The peak-hold circuit 33 holds the peak of the detected voltage detected by the voltage-detecting voltage-dividing resistors R1 and R2 of the peak-hold circuit 3A by the voltage-holding capacitor C13 using the action of negative feedback, then gradually decreases the detected voltage by the charge-discharging variable resistor R13, and outputs the detected voltage to the voltage comparator unit 34. In this case, the peak-hold circuit 33 detects an input voltage based on the rectified voltage, and outputs the signal voltage Vs2 indicating the input voltage to the voltage comparator unit 34.

In this case, the decrease rate of the detected voltage is determined by the time constant (C13 x R13) of the time constant circuit 35. The variable resistor R13 is configured in a manner similar to that of the variable resistor R3. Then, when the user operates the operation unit 7 including, for example, a keyboard to input the time constant (C13 x R13), the control signal Sr2 indicating R13 corresponding thereto is applied from the controller unit 5B to the control terminal of the variable resistor R13, and the resistance value of the variable resistor R13 is set thereto.

The voltage comparator unit 34 includes a comparator 23, a reference voltage source 26 having a reference voltage Vref2, and a reverse voltage blocking output diode D24. The voltage comparator unit 34 configured as described above compares the signal voltage Vs2 with a predetermined threshold voltage (reference voltage) Vref2. Then, when the signal voltage Vs2 ≥ the threshold voltage Vref2, the transistor Q11 is turned on and generates an enable signal Se at the H level, and when the signal voltage Vs2 < the threshold voltage Vref2, the transistor Q11 is turned off and generates an enable signal Se at the L level.

In this case, the time constant (C13 x R13) < the time constant (C3 x R3) is set thereto, and the threshold voltage Vref2 < Vrefl is set. With this setting, when the input voltage Vin in the steady state decreases, the signal voltage Vs2 immediately decreases earlier than the peak-hold circuit of the peak-hold circuit 3A.

According to the controller circuit 10B of the power supply circuit apparatus according to the second embodiment configured as described above, the operation can be performed as in the following operation example.
(1) When the input voltage Vin is, for example, AC 160 V or more, the steady state operation continues.
(2) When the input voltage Vin becomes less than AC 160 V of the first threshold voltage Vref1, the operation of the controller unit 5B is stopped in 0.3 seconds by the operation of the controller circuit including the peak-hold circuit 3A and the voltage comparator unit 4A, but the operation is immediately restored when the input voltage Vin rises to AC 200 V.
(3) However, when the input voltage Vin becomes less than AC 100 V of the second threshold voltage Vref2, the controller unit 5B is immediately stopped with the duration of 10 ms by the operation of the controller circuit including the peak-hold circuit 3B and the voltage comparator unit 4B.

As described above, according to the second embodiment, the operation of the controller unit 5B can be controlled in two stages using the two threshold voltages Vrefl and Vref2.

### MODIFIED EMBODIMENTS

In the above embodiments, the PFC circuit 2 is used as the power supply circuit apparatus, but the present invention is not limited thereto, and a power conversion apparatus such as a DC to DC converter may be used.

In the above embodiments, the peak-hold circuits 3A and 33 detect the rectified voltage, and holds the peak of the signal voltage corresponding to the rectified voltage, but the present invention is not limited thereto, and for example, the peak-hold circuits 3A and 33 may detect the input voltage to the PFC circuit 2 and hold the peak of the signal voltage corresponding to the input voltage.

### INDUSTRIAL APPLICABILITY

As mentioned in details above, according to the controller apparatus or the like of the power supply circuit apparatus according to the present invention, even when the power supply circuit apparatus is continuously used at a low voltage, it is possible to prevent the components from generating heat and being damaged, and it is possible to prevent the power supply circuit apparatus from immediately stopping in the case of an instantaneous drop.

### REFERENCE SIGNS LIST

1 Rectifying circuit
2 Power factor correction circuit (PFC circuit)
3 Voltage detector unit
3A, 33 Peak-hold circuit
4, 4A, 34 Voltage comparator unit
5, 5A, 5B Controller unit
6 Switching element
7 Operation unit
10, 10A, 10B Controller circuit
11, 12, 21, 22 Operational amplifier
13, 23 Comparator
14 Reference voltage generator circuit
15, 25, 35 Time constant circuit
16, 26 Reference voltage source
30 Additional controller circuit
C1 to C13 Capacitor
D1 to D24 Diode
L1 Choke inductor
Q1 MOS field-effect transistor (MOS transistor)
Q 11 PNP bipolar transistor (transistor)
R1 to R6 Resistor
T1, T11, T12 Input terminal
T2, T13, T14 Output terminal

## Claims

1. A controller apparatus (10A, 10B) for a power supply circuit apparatus, the controller apparatus (10A, 10B) that converts an input voltage (Vin) into a predetermined voltage,
**characterized in that**
the controller apparatus (10A, 10B) comprises:
a first peak-hold circuit (33) configured to detect the input voltage (Vin), and hold a peak of a signal voltage (Vs1) corresponding to the input voltage (Vin);
a first time constant circuit (15) configured to discharges a peak-held signal voltage (Vs1) with a predetermined first time constant, and output a discharged signal voltage (Vs1); and
a controller (4A, 5A) configured to compare the discharged signal voltage (Vs1) with a predetermined first threshold voltage (Vrefl), and operates the power supply circuit apparatus when the discharged signal voltage (Vs1) is equal to or higher than the first threshold voltage (Vrefl), and stops an operation of the power supply circuit apparatus when the discharged signal voltage (Vs1) is lower than the first threshold voltage (Vref1).

2. The controller apparatus (10A, 10B) for the power supply circuit apparatus as claimed in claim 1, further comprising an operation unit (7) that adjustably sets a first time constant of the first time constant circuit (15).

3. The controller apparatus (10A, 10B) for the power supply circuit apparatus as claimed in claim 1 or 2,
wherein the controller (5A, 5B) further comprises:
a second peak-hold circuit (33) configured to detect the input voltage (Vin), and hold a peak of a signal voltage (Vs2) corresponding to the input voltage (Vin); and
a second time constant circuit (35) configured to discharge a peak-held signal voltage (Vs2) with a predetermined second time constant smaller than the first time constant, and output the discharged signal voltage (Vs2), and
wherein the controller (34, 5B) compares the discharged signal voltage (Vs2) with a predetermined second threshold voltage (Vref2) lower than the first threshold voltage (Vrefl), operates the power supply circuit apparatus when the discharged signal voltage (Vs2) is equal to or higher than the second threshold voltage (Vref2), and stops the operation of the power supply circuit apparatus when the discharged signal voltage (Vs2) is lower than the second threshold voltage (Vref2).

4. The controller apparatus (10A, 10B) for the power supply circuit apparatus as claimed in claim 3 citing on claim 2,
wherein the operation unit (7) further adjustably sets a second time constant of the second time constant circuit (35).

5. A power supply circuit apparatus comprising the controller apparatus (10A, 10B) for the power supply circuit apparatus as claimed in claim 1.

6. The power supply circuit apparatus as claimed in claim 5, further comprising a rectifying circuit (1) provided at a preceding stage of the power supply circuit apparatus.

7. The power supply circuit apparatus as claimed in claim 5 or 6,
wherein the power supply circuit apparatus is a power factor correction circuit (2) or a power conversion apparatus.

8. A method of controlling a power supply circuit apparatus that converts an input voltage (Vin) into a predetermined voltage,
**characterized in that**
the method comprises steps of:
by a first peak-hold circuit (3A), detecting the input voltage (Vin), and holding a peak of a signal voltage (Vs1) corresponding to the input voltage (Vin);
by a first time constant circuit (15), discharging a peak-held signal voltage (Vs1) with a predetermined first time constant, and outputting a discharged signal voltage (Vs1); and
by a controller (4A, 5A), comparing the discharged signal voltage (Vs2) with a predetermined first threshold voltage (Vrefl), operating the power supply circuit apparatus when the discharged signal voltage (Vs1) is equal to or higher than the first threshold voltage (Vref1), and stopping an operation of the power supply circuit apparatus when the discharged signal voltage (Vs1) is lower than the first threshold voltage (Vref1).

9. The method of controlling the power supply circuit apparatus as claimed in claim 8, further comprising:
by a second peak-hold circuit (33), detecting the input voltage (Vin), and holding a peak of a signal voltage (Vs2) corresponding to the input voltage (Vin);
by a second time constant circuit (35), discharging a peak-held signal voltage (Vs2) with a predetermined second time constant smaller than the first time constant, and outputting a discharged signal voltage (Vs2); and
by the controller (34, 5B), comparing the discharged signal voltage (Vs2) with a predetermined second threshold voltage (Vref2) lower than the first threshold voltage (Vrefl), operating the power supply circuit apparatus when the discharged signal voltage (Vs2) is equal to or higher than the second threshold voltage (Vref2), and stopping the operation of the power supply circuit apparatus when the discharged signal voltage (Vs2) is lower than the second threshold voltage (Vref2).
